# EUROPEAN PATENT SPECIFICATION

(11) **EP 2 493 135 B1**
(45) Date of publication and mention of the grant of the patent: **14.11.2018**
(21) Application number: 09846081.9
(22) Date of filing: 24.12.2009
(51) Int. Cl.: H04L 12/58, H04W 4/14, H04W 24/04

(54) **SHORT-MESSAGE TRANSFER METHOD, SUBSYSTEM AND SYSTEM**
VERFAHREN, SUBSYSTEM UND SYSTEM ZUR ÜBERTRAGUNG VON KURZNACHRICHTEN
PROCÉDÉ, SOUS-SYSTÈME ET SYSTÈME DE TRANSFERT DE MESSAGES COURTS

(30) Priority: 20.10.2009 CN 200910205519
(43) Date of publication of application: 29.08.2012
(73) Proprietor: ZTE Corporation, Shenzhen, Guangdong 518057 (CN)
(72) Inventor: WU, Xiuying, Shenzhen City Guangdong Province 518057 (CN); WANG, Liangjia, Shenzhen City Guangdong Province 518057 (CN)
(74) Representative: Novagraaf Technologies
(86) International application number: PCT/CN2009/076009
(87) International publication number: WO 2010/145167

(56) References cited:
- EP-A1- 1 933 573
- EP-A2- 1 603 348
- WO-A1-2009/103497
- CN-A- 1 662 076
- CN-A- 1 852 375
- KR-A- 20080 048 231
- US-A1- 2008 095 337
- US-A1- 2008 161 028

## Description

### Technical Field

The present invention relates to the field of value-added services, and more especially, to a short message transfer method, apparatus and system.

### Background of the Related Art

With the significant upgrade of the mobile terminal popularity and the rapid development of the short message value-added services, communication through short messages is becoming indispensable communication means in people's daily works and lives. The necessary conditions for a mobile terminal to receive a short message are: the terminal is not suspended, the terminal is not powered off, and the terminal is in the network coverage etc.. In real lives, sometimes the mobile terminal users may inevitably make the terminal not be used due to various reasons. The short message transfer service a short message value-added service which is put forward based on the above situation. It achieves successfully issuing a short message by transferring the short message to a third number so that the original terminal forwards the short message to the third number in the case that the original terminal cannot receive short message.

The short message transfer service usually takes an absolute transfer method, that is, when the number A opens the short message transfer service, the short messages transmitted to the number A will be unconditionally transferred to a transfer number set by the number A. On this basis, a time period transfer method can further be added, that is, the short messages transmitted to the number A within an effective transfer time period are unconditionally transferred to the transfer number set by the number A.

In the abovementioned short message transfer process, there are the following problems:
activation or deactivation of a short message service of a number can only be pre-set by the user, and for a number which is in a short message transfer service activation state, all the short messages transmitted to the number will be transferred to a transfer number, which results in poor system flexibility.

The document US20080095337A1 discloses systems and methods that allow for storing of data message (e.g., text messages or multimedia messages) in a data message mailbox. If a data message is sent from a sender to a recipient, then the communication network receiving the data message attempts to deliver the data message to the recipient. If unsuccessful in delivering the data message, then the network stores the data message for the recipient. If the communication later receives a request to retrieve the stored data message from the recipient, then the communication network delivers the stored data message to the recipient.

The document EP1603348A2 discloses a system for providing a message transfer service capable of notifying a result of transmission of a message to a subscriber.

### Summary of the Invention

The present invention provides a short message transfer method and system to solve the problem of poor flexibility of the short message transfer system.

To achieve the aforementioned purpose, the technical solution of the present invention is implemented as follows.

The present invention provides a short message transfer method, comprising:
receiving a status report message of a transfer service short message transmitted by a destination short message center;
querying a transfer number corresponding to a destination number of the transfer service short message when the status report message indicates that the transfer service short message is delivered unsuccessfully; and
replacing the destination number of the transfer service short message with the transfer number, and transmitting the transfer service short message to a transfer short message center.

Furthermore, before receiving the status report message of the transfer service short message transmitted by the destination short message center, the method further comprises:
receiving a short message transmitted by a source short message center;
if the destination number of the short message opens a transfer service, determining that the short message is a transfer service short message;
determining whether the destination number of the transfer service short message is currently in an absolute transfer state or a conditional transfer state;
if the destination number of the transfer service short message is currently in a conditional transfer state, delivering the transfer service short message to the destination short message center; or,
if the destination number of the transfer service short message is currently in an absolute transfer state, transmitting the transfer service short message to the transfer short message center.

Furthermore, delivering the transfer service short message to the destination short message center specifically comprises:
delivering the transfer service short message to the destination short message center, and indicating the destination short message center to deliver the transfer service short message for only once and returning a status report message; or,
delivering the transfer service short message to the destination short message center, and indicating the destination short message center to deliver the transfer service short message by means of repeatedly delivering and returning a status report message.

Furthermore, the short message transfer method further comprises:
if the status report message indicates that the transfer service short message is delivered successfully, transmitting a status report message to the source short message center of the transfer service short message to indicate that the transfer service short message is delivered successfully.

Furthermore, after the step of replacing the destination number of the transfer service short message with the transfer number and transmitting the transfer service short message to the transfer short message center, the method further comprises:
receiving the status report message transmitted by the transfer short message center;
if the status report message indicates that the transfer service short message is delivered successfully to the transfer number, constructing and transmitting a successful status report message to the source short message center; or
if the status report message indicates that the transfer service short message is delivered unsuccessfully to the transfer number, constructing and transmitting an unsuccessful status report message to the source short message center.

The present invention further provides a short message transfer subsystem, comprising:
an interface machine module, configured to receive a status report message of a transfer service short message transmitted by a destination short message center;
a service processing module, configured to query a transfer number corresponding to a destination number of the transfer service short message when the status report message indicates that the transfer service short message is delivered unsuccessfully, replace the destination number of the transfer service short message with the transfer number, and transmit the transfer service short message to the transfer short message center via the interface machine module.

Furthermore, the interface machine module is further configured to receive a short message transmitted by a source short message center, determine whether the short message is a transfer service short message or not, and forward the transfer service short message to the service processing module; and
the service processing module is further configured to determine whether the destination number of the transfer service short message is currently in an absolute transfer state or a conditional transfer state, deliver the transfer service short message to the destination short message center when the destination number of the transfer service short message is currently in a conditional transfer state; or transmit the transfer service short message to the transfer short message center when the destination number of the transfer service short message is currently in an absolute transfer state.

Furthermore, the interface machine module is further configured to receive a status report message transmitted by the transfer short message center;
the service processing module is further configured to:
construct and transmit a successful status report message to the source short message center via the interface machine module when the status report message indicates that the transfer service short message is delivered successfully to the transfer number; or,
construct and transmit an unsuccessful status report message to the source short message center via the interface machine module when the status report message indicates that the transfer service short message is delivered unsuccessfully to the transfer number.

The present invention further provides a short message transfer system comprising a short message transfer subsystem, configured to receive a status report message of a transfer service short message transmitted by a destination short message center, query a transfer number corresponding to a destination number of the transfer service short message when the status report message indicates that the transfer service short message is delivered unsuccessfully, replace the destination number of the transfer service short message with the transfer number, and transmit the transfer service short message to the transfer short message center.

Furthermore, the short message transfer subsystem is further configured to receive a transfer service short message transmitted by a source short message center and determine whether a destination number of the transfer service short message is currently in an absolute transfer state or a conditional transfer state, and deliver the transfer service short message to the destination short message center when the destination number of the transfer service short message is currently in a conditional transfer state; or,
when the destination number of the transfer service short message is currently in an absolute transfer state, transmit the transfer service short message to the transfer short message center.

The present invention provides a short message transfer method, apparatus and system, which queries a transfer number corresponding to a number supporting short message transfer services when a transfer service short message is transmitted to the number supporting short message transfer services and is delivered unsuccessfully, and retransmits the transfer service short message to the transfer number, that is, the transfer service short message is forwarded to the transfer number only when the number is unreachable, thus achieving the conditional transfer of the short message and improving the flexibility of the short message transfer system.

### Brief Description of Drawings

FIG. 1 is a structural diagram of a network in an application environment in accordance with an embodiment of the present invention;
FIG. 2 is a diagram of an internal structure of a short message transfer subsystem 101 in FIG. 1;
FIG. 3 is a diagram of an internal structure of a service processing module 203 in FIG. 2;
FIG. 4 is a flow chart of a short message transfer method provided in a first embodiment of the present invention;
FIG. 5 is a flow chart of a short message transfer method provided in a second embodiment of the present invention;
FIG. 6 is a structural diagram of a short message transfer subsystem provided in an embodiment of the present invention; and
FIG. 7 is a structural diagram of a short message transfer system provided in an embodiment of the present invention.

### Preferred Embodiments of the Present Invention

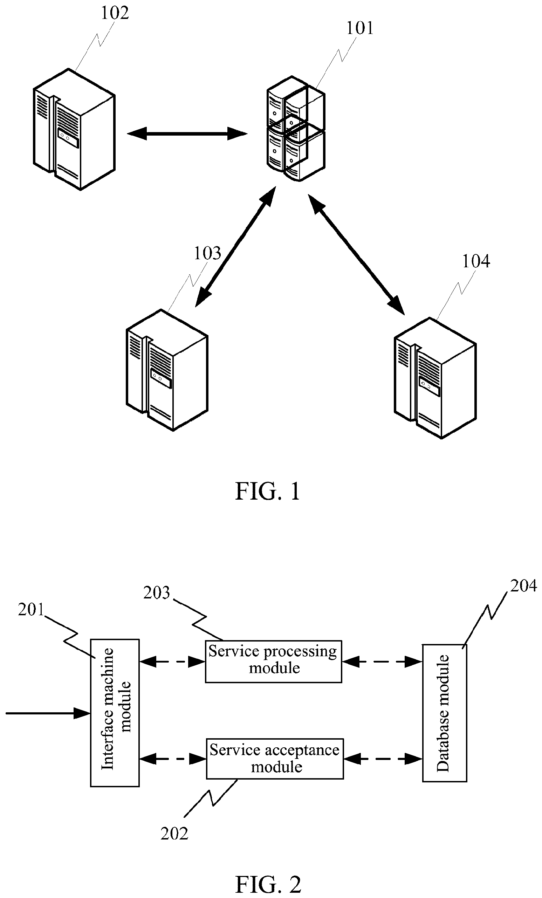

In order to solve the problem of poor flexibility of a short message transfer system, a first embodiment of the present invention provides a short message transfer method. An application environment in accordance with the embodiment of the present invention is shown in FIG. 1, comprising a short message transfer subsystem 101, a source short message center 102, a destination short message center 103 and a transfer short message center 104; wherein, a destination number of a transfer service short message is under the destination short message center 103, and a transfer number of the number is under the transfer short message center 104.

Furthermore, an internal structure of the short message transfer subsystem 101 in FIG. 1 is shown in FIG. 2, comprising: an interface machine module 201, a service acceptance module 202, a service processing module 203 and a database module 204.

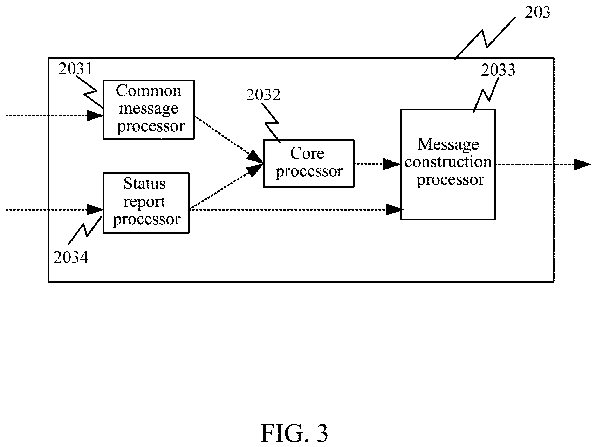

Wherein, the service processing module 203 is shown in FIG. 3, comprising: a common message processor 2031, a core processor 2032, a message construction processor 2033 and a status report processor 2034.

The interface machine module 201 is responsible for receiving all messages from the short message center, and converting the external messages into an unified internal message format, to enable the system flexibly extend different message communication protocols; and then determining the messages of the unified internal format based on the message type, i.e., if the message is a service acceptance message, such as a status report message, a transfer service short message, and so on, the message is delivered to the service acceptance module 202, and otherwise the message is delivered to the service processing module 203; and in addition, the interface machine module further has a transfer function, i.e., converting the messages of the internal format into external messages and forwarding the external messages.

The service acceptance module 202 is responsible for opening and cancelling an account of the short message transfer service as well as configuring features of a specific user service.

The service processing module 203 firstly processes a received message in the common message processor 2031 when receiving the common uplink message which then enters the core processor 2032, determines a trigger mode of the transfer service, i.e., an absolute transfer or a conditional transfer; after determining that the message needs to be delivered directly to the destination short message center, the core processor 2032 sets that the message needs a status report and meanwhile indicates to the short message center whether the short message needs to be delivered repeatedly and a status report is returned eventually, or the short message only needs to be delivered for the first time and a status report is constructed according to a first delivery result and returned to the short message transfer subsystem; and the message construction processor 2033 constructs a message according to a processing result of the core service processor 2032.

After receiving the status report, the service processing module 203 processes the received status report in the status report processor 2034, the status report processor 2034 determines the message transmitting result, and if the message is transmitted successfully, the message construction processor 2033 is notified to construct and deliver a successful status report to the source short message center; otherwise, the status report processor 2034 determines whether the message is a status report returned by the destination short message center after the original short message is issued, and if the message is the status report, the message is delivered to the core processor 2032 and the core processor 2032 queries a transfer number corresponding to the destination number on the basis that this status report is the one returned by the destination short message center after the original message is issued, and meanwhile, after it is indicated for the short message center that the message needs to be repeatedly delivered, the process proceeds to the message construction processor 2033, and the message construction processor 2033 constructs a message to issue. Otherwise, the status report processor 2034 determines that the message is a status report of a message issued to the transfer number, and notifies the message construction processor 2033 to construct and deliver a status report to the source short message center.

The database module 204 comprises a memory database and a physical database, wherein, the memory database is mainly used to transfer the related information that needs to be stored in a transfer service trigger process; and the physical database stores basic information of the user and the service triggering information.

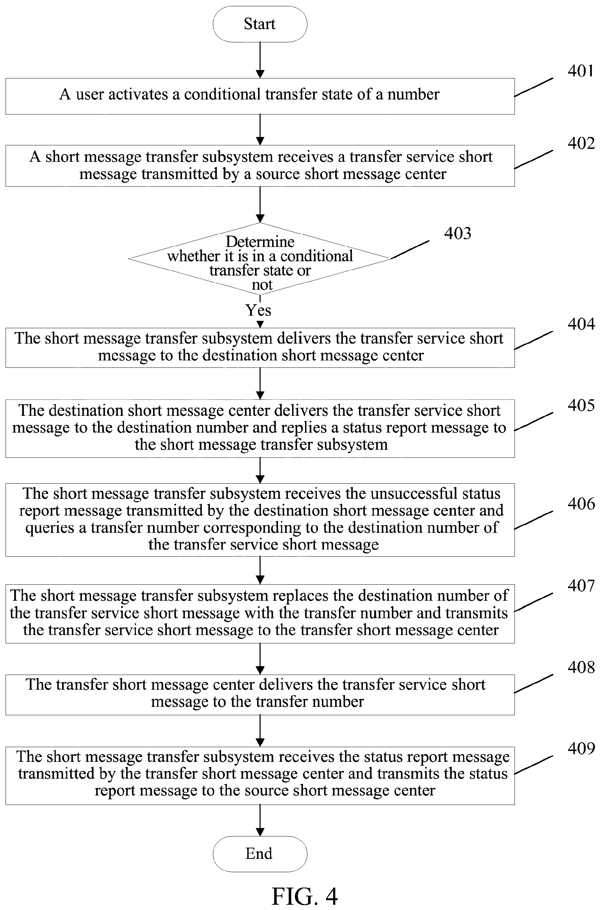

The process of implementing the short message transfer using the method is shown in FIG. 4, comprising the following steps.

In step 401, a user activates a conditional transfer state of a number.

In the embodiments of the present invention, two states are specified for a short message transfer service, i.e., an absolute transfer state and a conditional transfer state. Under the absolute transfer state, all short messages transmitted to the number will be transferred to the transfer number; and under the conditional transfer state, the short message is forwarded to the transfer number only when the number is unreachable.

In this step, the user firstly activates the short message transfer state of the number, specifically the conditional transfer state, after that, the number is in the conditional transfer state, and when the number is unreachable, the short message transmitted to the number will be transferred to the transfer number.

In step 402, the short message transfer subsystem receives the transfer service short message transmitted by the source short message center.

In this step, after receiving the short message transmitted by the source short message center, the short message transfer subsystem queries whether the destination number of this short message opens a short message transfer service or not, and if the number opens a short message transfer service, the short message is considered as a transfer service short message, that is, the transfer service short message will be transferred to the transfer number of the destination number when the destination number is unreachable.

In step 403, the short message transfer subsystem determines whether the destination number of the transfer service short message is currently in a conditional transfer state or not.

In step 404, if the destination number of the transfer service short message is currently in a conditional transfer state, the short message transfer subsystem delivers the transfer service short message to the destination short message center.

In this step, according to the determination result in step 403, if the destination number of the transfer service short message is currently in a conditional transfer state, it is indicated that the transfer service short message can be delivered to the transfer number if it is delivered unsuccessfully to the destination number, and therefore, the transfer service short message is firstly delivered to the destination short message center, and the destination short message center is indicated to deliver the transfer service short message for only once and return a status report message to report whether the transfer service short message is delivered successfully or unsuccessfully.

In addition, if the user activates an absolute transfer state of the destination number in step 401, that is, the destination number of the transfer service short message is currently not in a conditional transfer state, it is indicated that all short messages transmitted to the destination number need to be unconditionally transferred to the transfer number, and in this step, the transfer service short messages will be directly transmitted to the transfer short message center.

In step 405, the destination short message center delivers the transfer service short message to the destination number and replies a status report message to the short message transfer subsystem.

In this step, the destination short message center delivers the received transfer service short message to the destination number, and if the received transfer service short message is delivered unsuccessfully, constructs an unsuccessful status report message; and if the received transfer service short message is delivered successfully, constructs a successful status report message. The status report message is replied to the short message transfer subsystem

In the embodiment of the present invention, it is illustrated by example of an unsuccessful delivery, and after receiving the unsuccessful status report message, the destination short message center needs to transmit an unsuccessful status report message to the short message transfer subsystem, and then the short message transfer subsystem transmits the unsuccessful status report message to the source short message center.

In step 406, the short message transfer subsystem receives the unsuccessful status report message transmitted by the destination short message center, and queries the transfer number corresponding to the destination number of the transfer service short message.

In step 407, the short message transfer subsystem replaces the destination number of the transfer service short message with the transfer number and transmits the transfer service short message to the transfer short message center.

In step 408, the transfer short message center delivers the transfer service short message to the transfer number.

In step 409, the short message transfer subsystem receives the status report message transmitted by the transfer short message center and transmits the status report message to the source short message center.

In this step, the transfer short message center firstly receives the status report message returned by the transfer number, determines whether the delivery is successful or not according to the status report message, and constructs a successful or unsuccessful status report message according to the delivery result and transmits the status report message to the short message transfer subsystem.

The short message transfer subsystem receives the status report message transmitted by the transfer short message center, determines whether the delivery is successful or not according to the status report message, and constructs a successful or unsuccessful status report message according to the delivery result and transmits the status report message to the source short message center.

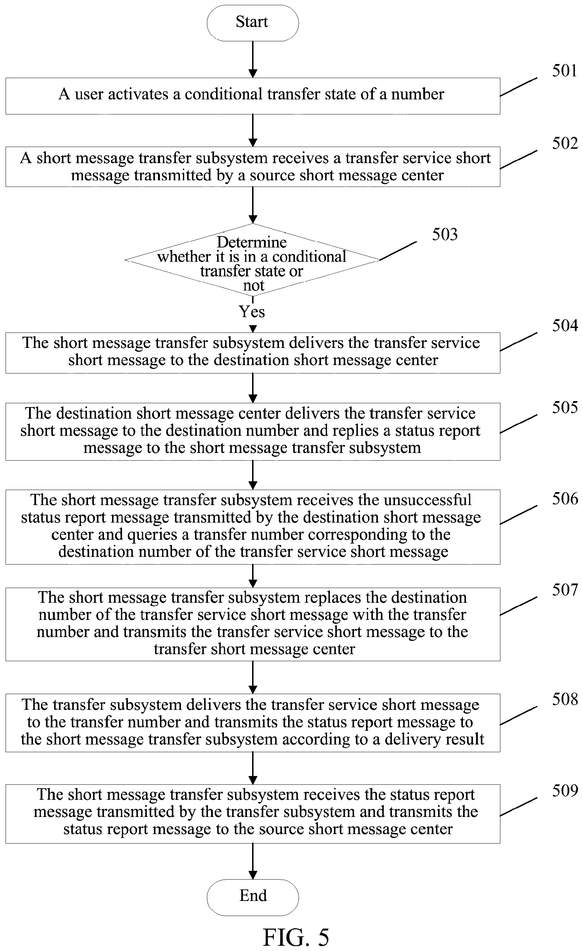

The second embodiment of the present invention will be described in combination with accompanying drawings hereinafter. The process of implementing conditional transfer using a short message transfer method provided in the embodiment of the present invention is shown in FIG. 5, wherein, steps 501 to 503 are the same as steps 401 to 403 in the first embodiment of the present invention and will not be described.

In step 504, if the destination number of the transfer service short message is currently in a conditional transfer status, the short message transfer subsystem delivers the transfer service short message to the destination short message center.

In this step, according to the determination result in step 503, if the destination number of the transfer service short message is currently in a conditional transfer state, it is indicated that the transfer service short message can be delivered to the transfer number when the message is delivered unsuccessfully to the destination number, and therefore, firstly the transfer service short message is delivered to the destination short message center, and the destination short message center is indicated to deliver the transfer service short message by means of repeatedly delivering, i.e., reattempting to deliver when the delivery is unsuccessful (a number of attempts is determined by the transfer short message center), and constructs a status report message according to the final delivery result and transmits the status report message to the short message transfer subsystem.

In step 505, the destination short message center delivers the transfer service short message to the destination number and replies a status report message to the short message transfer subsystem.

In this step, the destination short message center repeatedly delivers the received transfer service short message to the destination number, and constructs the status report message in accordance with the final delivery result, and if the delivery is unsuccessful, constructs an unsuccessful status report message; and if the delivery is successful, constructs a successful status report message. The status report message is replied to the short message transfer subsystem.

If the delivery is successful, after receiving the successful status report message, the destination short message center transmits the directly constructed successful status report message to the source short message center; and if the delivery is unsuccessful, after receiving the unsuccessful status report message, the destination short message center needs to transmit the unsuccessful status report message to the source short message center.

Steps 506 to 509 are the same as steps 406 to 409 in the embodiment of the present invention and will not be described.

It should be illustrated that in the embodiments of the present invention, the transfer service short message is a point to point short message, except that the destination number of the short message is a number that opens a transfer service; and the transfer short message center and the destination short message center can be two different short message centers or can also be the same short message center (that is, the destination number and the transfer number are numbers under the same short message center).

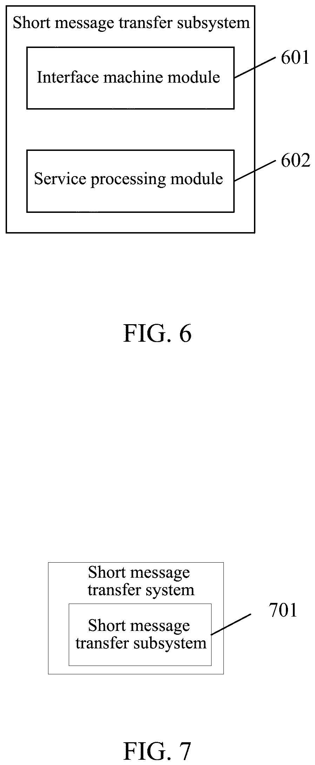

The embodiment of the present invention further provides a short message transfer subsystem, and the structure of the short message transfer subsystem is shown in FIG. 6, which comprises the following modules.

The interface machine module 601 is configured to receive a status report message of a transfer service short message transmitted by a destination short message center.

The service processing module 602 is configured to query a transfer number corresponding to a destination number of the transfer service short message when the status report message indicates that the transfer service short message is delivered unsuccessfully, replace the destination number of the transfer service short message with the transfer number, and transmit the transfer service short message to the transfer short message center via the interface machine module 601.

Furthermore, the interface machine module 601 is further configured to receive a short message transmitted by a source short message center, and determine whether the short message is a transfer service short message or not, and forward the transfer service short message to the service processing module 602.

The service processing module 602 is further configured to determine whether the destination number of the transfer service short message is currently in an absolute transfer state or a conditional transfer state, and deliver the transfer service short message to the destination short message center when the destination number of the transfer service short message is currently in a conditional transfer status, or transmit the transfer service short message to the transfer short message center when the destination number of the transfer service short message is currently in an absolute transfer state.

Furthermore, the interface machine module 601 is further configured to receive a status report message transmitted by the transfer short message center.

The service processing module 602 is further configured to construct and transmit a successful status report message to the source short message center via the interface machine module 601 when the status report message indicates that the transfer service short message is delivered successfully to the transfer number; or,
construct and transmit an unsuccessful status report message to the source short message center via the interface machine module 601 when the status report message indicates that the transfer service short message is delivered unsuccessfully to the transfer number.

The process of completing the short message transfer using the above short message transfer subsystem is as follows: firstly, the receiver module 601 receives a short message transmitted by the source short message center and determines whether the short message is a transfer service short message or not; in the case that the short message is determined as a transfer service short message, transmits the transfer service short message to the service processing module 602; and the service processing module 602 further determines whether the current service state of the destination number of the transfer service short message, and when the destination number is in a conditional transfer state, firstly delivers the transfer service short message to the destination short message center, and when the delivery is unsuccessful, queries the transfer number of the destination number of the transfer service short message, and delivers the short message to the transfer number.

The embodiment of the present invention further provides a short message transfer system, as shown in FIG. 7, comprising a short message transfer subsystem 701, configured to receive a status report message of a transfer service short message transmitted by a destination short message center, and query a transfer number corresponding to a destination number of the transfer service short message when the status report message indicates that the transfer service short message is delivered unsuccessfully, replace the destination number of the transfer service short message with the transfer number, and transmit the transfer service short message to the transfer short message center.

Furthermore, the short message transfer subsystem 701 is further configured to receive a transfer service short message transmitted by a source short message center and determine whether the destination number of the transfer service short message is currently in an absolute transfer state or a conditional transfer state, and when the destination number of the transfer service short message is in a conditional transfer state, deliver the transfer service short message to the destination short message center; or
when the destination number of the transfer service short message is in an absolute transfer status, deliver the transfer service short message to the transfer short message center.

When delivering the transfer service short message, according to the indication of the short message transfer subsystem, the destination short message center delivers the transfer service short message for only once and returns a status report message; or
delivers the transfer service short message by means of repeatedly delivering and returns a status report message.

The above short message transfer subsystem and short message transfer system can be combined with a short message transfer method provided in the embodiment of the present invention, which queries the transfer number corresponding to the number supporting short message transfer services when the transfer service short message is transmitted to the number supporting short message transfer services and is delivered unsuccessfully, retransmits the transfer service short message to the transfer number, i.e., forwarding the transfer service short message to the transfer number only when the number is unreachable, thus achieving the conditional transfer of the short message and improving the flexibility of the short message transfer system.

A person having ordinary skill in the art can understand that all or a part of the steps carried in the method for achieving the aforementioned embodiments can be implemented by a program instructing related hardware, and the program can be stored in a computer readable storage medium, and when executed, the program comprises one of the steps of the method embodiment, or a combination thereof.

In addition, various functional units in various embodiments of the present invention can be implemented in a form of hardware, or can also be implemented in a form of software functional modules. If implemented in the form of software functional modules and sold or used as an individual product, the integrated modules can also be stored in a computer readable storage media.

The aforementioned storage media can be a read-only memory, a disk or a CD-ROM etc.

The above description is only the specific embodiments of the present invention, and the protection scope of the present invention is not limited to the above description. Any skilled in the art can easily think of changes or substitutions within the technique scope disclosed in the present invention, which should be covered within the protection scope of the present invention. Therefore, the protection scope of the present invention should be based on the protection scope described in the claims.

## Claims

1. A short message transfer method, comprising:
receiving (405, 505) a status report message of a transfer service short message transmitted by a destination short message center (103); **characterized in that** the short message transfer method also comprises:
querying (406,506) a transfer number corresponding to a destination number of the transfer service short message when the status report message indicates that the transfer service short message is delivered unsuccessfully;
replacing (407, 507) the destination number of the transfer service short message with the transfer number, and transmitting (407, 507) the transfer service short message to a transfer short message center (104).

2. The short message transfer method of claim 1, wherein, before receiving the status report message of the transfer service short message transmitted by the destination short message center (103), the method further comprises:
receiving (402) a short message transmitted by a source short message center (102);
if the destination number of the short message opens a transfer service, determining that the short message is a transfer service short message;
determining whether the destination number of the transfer service short message is currently in an absolute transfer state or a conditional transfer state (403, 503) wherein, under the absolute transfer state, all short messages transmitted to the destination number are transferred to the transfer number; and under the conditional transfer state, the short message is forwarded to the transfer number only when the destination number is unreachable;
if the destination number of the transfer service short message is currently in a conditional transfer state, delivering the transfer service short message to the destination short message center (404, 504); or,
if the destination number of the transfer service short message is currently in an absolute transfer state, transmitting the transfer service short message to the transfer short message center.

3. The short message transfer method of claim 1 or 2, wherein, delivering the transfer service short message to the destination short message center (404, 504) specifically comprises:
delivering the transfer service short message to the destination short message center, and indicating the destination short message center to deliver the transfer service short message for only once and returning a status report message; or,
delivering the transfer service short message to the destination short message center, and indicating the destination short message center to deliver the transfer service short message by means of repeatedly delivering and returning a status report message.

4. The short message transfer method of claim 1, further comprising:
if the status report message indicates that the transfer service short message is delivered successfully, transmitting a status report message to the source short message center of the transfer service short message to indicate that the transfer service short message is delivered successfully.

5. The short message transfer method of claim 1, wherein, after replacing the destination number of the transfer service short message with the transfer number and transmitting the transfer service short message to the transfer short message center, the method further comprises:
receiving the status report message transmitted by the transfer short message center;
if the status report message indicates that the transfer service short message is delivered successfully to the transfer number, constructing and transmitting a successful status report message to the source short message center; or
if the status report message indicates that the transfer service short message is delivered unsuccessfully to the transfer number, constructing and transmitting an unsuccessful status report message to the source short message center.

6. A short message transfer subsystem (101, 701), comprising: an interface machine module (201, 601), configured to receive (405, 505) a status report message of a transfer service short message transmitted by a destination short message center (103); **characterized in that** the short message transfert subsystem (101, 701) also comprises:
a service processing module (203, 602), configured to query (406, 506) a transfer number corresponding to a destination number of the transfer service short message (104) when the status report message indicates that the transfer service short message is delivered unsuccessfully, to replace (407, 507)
the destination number of the transfer service short message with the transfer number, and to transmit (407, 507) the transfer service short message to the transfer short message center (104) via the interface machine module (201, 601).

7. The short message transfer subsystem (101, 701) of claim 6, wherein,
the interface machine module (201, 601) is further configured to receive a short message transmitted by a source short message center (102), determine whether the short message is a transfer service short message or not, and forward the transfer service short message to the service processing module (203, 602);
the service processing module (203, 602) is further configured to determine whether the destination number of the transfer service short message is currently in an absolute transfer state or a conditional transfer state (403, 503), wherein, under the absolute transfer state, all short messages transmitted to the destination number are transferred to the transfer number; and under the conditional transfer state, the short message is forwarded to the transfer number only when the destination number is unreachable, and to deliver the transfer service short message to the destination short message center (404, 504) when the destination number of the transfer service short message is currently in a conditional transfer state; or transmit the transfer service short message to the transfer short message center when the destination number of the transfer service short message is currently in an absolute transfer state.

8. The short message transfer subsystem (101, 701) of claim 6, wherein, the interface machine module (201, 601) is further configured to receive the status report message transmitted by the transfer short message center;
the service processing module (203, 603) is further configured to:
construct and transmit a successful status report message to the source short message center via the interface machine module when the status report message indicates that the transfer service short message is delivered successfully to the transfer number; or,
construct and transmit an unsuccessful status report message to the source short message center (102) via the interface machine module (201, 601) when the status report message indicates that the transfer service short message is delivered unsuccessfully to the transfer number.

## Patentansprüche

1. Kurznachrichten-Transferverfahren, umfassend:
Empfangen (405, 505) einer Statusberichtsnachricht einer Transferdienst-Kurznachricht, die von einem Ziel-Kurznachrichtenzentrum (103) übertragen wird;
**dadurch gekennzeichnet, dass** das Kurznachrichten-Transferverfahren ebenfalls umfasst:
Abfragen (406, 506) einer Transfernummer, die einer Zielnummer der Transferdienst-Kurznachricht entspricht, wenn die Statusberichtsnachricht darauf hinweist, dass die Transferdienst-Kurznachricht nicht erfolgreich ausgeliefert wurde;
Ersetzen (407, 507) der Zielnummer der Transferdienst-Kurznachricht mit der Transfernummer, und Übertragen (407, 507) der Transferdienst-Kurznachricht an ein Transfer-Kurznachrichtenzentrum (104).

2. Kurznachrichten-Transferverfahren nach Anspruch 1, wobei vor dem Empfangen der vom Ziel-Kurznachrichtenzentrum (103) übertragenen Statusberichtsnachricht der Transferdienst-Kurznachricht das Verfahren weiter umfasst:
Empfangen (402) einer von einem Quellen-Kurznachrichtenzentrum (102) übertragenen Kurznachricht;
wenn die Zielnummer der Kurznachricht einen Transferdienst öffnet, Bestimmen, dass die Kurznachricht eine Transferdienst-Kurznachricht ist;
Bestimmen, ob sich die Zielnummer der Transferdienst-Kurznachricht aktuell in einem absoluten Transferzustand oder einem bedingten Transferzustand (403, 503) befindet, wobei unter dem absoluten Transferzustand alle an die Zielnummer übertragenen Kurznachrichten an die Transfernummer transferiert werden; und unter dem bedingten Transferzustand die Kurznachricht nur dann an die Transfernummer weitergeleitet wird, wenn die Zielnummer nicht erreichbar ist;
wenn sich die Zielnummer der Transferdienst-Kurznachricht aktuell in einem bedingten Transferzustand befindet, Ausliefern der Transferdienst-Kurznachricht an das Ziel-Kurznachrichtenzentrum (404, 504); oder
wenn sich die Zielnummer der Transferdienst-Kurznachricht aktuell in einem absoluten Transferzustand befindet, Übertragen der Transferdienst-Kurznachricht an das Transfer-Kurznachrichtenzentrum.

3. Kurznachrichten-Transferverfahren nach Anspruch 1 oder 2, wobei das Ausliefern der Transferdienst-Kurznachricht an das Ziel-Kurznachrichtenzentrum (404, 504) spezifisch umfasst:
Ausliefern der Transferdienst-Kurznachricht an das Ziel-Kurznachrichtenzentrum, und Hinweisen des Ziel-Kurznachrichtenzentrums darauf, die Transferdienst-Kurznachricht nur einmal auszuliefern und eine Statusberichtsnachricht zurückzugeben; oder
Ausliefern der Transferdienst-Kurznachricht an das Ziel-Kurznachrichtenzentrum, und Hinweisen des Ziel-Kurznachrichtenzentrums darauf, die Transferdienst-Kurznachricht mittels wiederholten Auslieferns und Zurückgebens einer Statusberichtsnachricht auszuliefern.

4. Kurznachrichten-Transferverfahren nach Anspruch 1, weiter umfassend:
wenn die Statusberichtsnachricht darauf hinweist, dass die Transferdienst-Kurznachricht erfolgreich ausgeliefert wurde, Übertragen einer Statusberichtsnachricht an das Quellen-Kurznachrichtenzentrum der Transferdienst-Kurznachricht, um darauf hinzuweisen, dass die Transferdienst-Kurznachricht erfolgreich ausgeliefert wurde.

5. Kurznachrichten-Transferverfahren nach Anspruch 1, wobei nach dem Ersetzen der Zielnummer der Transferdienst-Kurznachricht mit der Transfernummer, und Übertragen der Transferdienst-Kurznachricht an das Transfer-Kurznachrichtenzentrum das Verfahren weiter umfasst:
Empfangen der vom Transfer-Kurznachrichtenzentrum übertragenen Statusberichtsnachricht;
wenn die Statusberichtsnachricht darauf hinweist, dass die Transferdienst-Kurznachricht erfolgreich an die Transfernummer ausgeliefert wurde, Erstellen und Übertragen einer Erfolgreich-Statusberichtsnachricht an das Quellen-Kurznachrichtenzentrum; oder
wenn die Statusberichtsnachricht darauf hinweist, dass die Transferdienst-Kurznachricht nicht erfolgreich an die Transfernummer ausgeliefert wurde, Erstellen und Übertragen einer Nicht-erfolgreich-Statusberichtsnachricht an das Quellen-Kurznachrichtenzentrum.

6. Kurznachrichten-Transfersubsystem (101, 701), umfassend:
ein Schnittstellenmaschinenmodul (201, 601), das dazu eingerichtet ist, eine Statusberichtsnachricht einer Transferdienst-Kurznachricht zu empfangen (405, 505), die von einem Ziel-Kurznachrichtenzentrum (103) übertragen wird;
**dadurch gekennzeichnet, dass** das Kurznachrichten-Transfersubsystem (101, 701) ebenfalls umfasst:
ein Dienstverarbeitungsmodul (203, 602), das dazu eingerichtet ist, eine Transfernummer abzufragen (406, 506), die einer Zielnummer der Transferdienst-Kurznachricht (104) entspricht, wenn die Statusberichtsnachricht darauf hinweist, dass die Transferdienst-Kurznachricht nicht erfolgreich ausgeliefert wurde, die Zielnummer der Transferdienst-Kurznachricht mit der Transfernummer zu ersetzen (407, 507) und die Transferdienst-Kurznachricht über das Schnittstellenmaschinenmodul (201, 601) an das Transfer-Kurznachrichtenzentrum (104) zu übertragen (407, 507).

7. Kurznachrichten-Transfersubsystem (101, 701) nach Anspruch 6, wobei
das Schnittstellenmaschinenmodul (201, 601) weiter dazu eingerichtet ist, eine von einem Quellen-Kurznachrichtenzentrum (102) übertragene Kurznachricht zu empfangen, zu bestimmen, ob die Kurznachricht eine Transferdienst-Kurznachricht ist oder nicht, und die Transferdienst-Kurznachricht an das Dienstverarbeitungsmodul (203, 602) weiterzuleiten;
das Dienstverarbeitungsmodul (203, 602) weiter dazu eingerichtet ist, zu bestimmen, ob sich die Zielnummer der Transferdienst-Kurznachricht aktuell in einem absoluten Transferzustand oder einem bedingten Transferzustand (403, 503) befindet, wobei unter dem absoluten Transferzustand alle an die Zielnummer übertragenen Kurznachrichten an die Transfernummer transferiert werden; und unter dem bedingten Transferzustand die Kurznachricht nur dann an die Transfernummer weitergeleitet wird, wenn die Zielnummer nicht erreichbar ist, und die Transferdienst-Kurznachricht an das Ziel-Kurznachrichtenzentrum (404, 504) auszuliefern, wenn sich die Zielnummer der Transferdienst-Kurznachricht aktuell in einem bedingten Transferzustand befindet; oder die Transferdienst-Kurznachricht an das Transfer-Kurznachrichtenzentrum zu übertragen, wenn sich die Zielnummer der Transferdienst-Kurznachricht aktuell in einem absoluten Transferzustand befindet.

8. Kurznachrichten-Transfersubsystem (101, 701) nach Anspruch 6, wobei
das Schnittstellenmaschinenmodul (201, 601) weiter dazu eingerichtet ist, die vom Transfer-Kurznachrichtenzentrum übertragene Statusberichtsnachricht zu empfangen;
das Dienstverarbeitungsmodul (203, 603) weiter dazu eingerichtet ist:
eine Erfolgreich-Statusberichtsnachricht zu erstellen und über das Schnittstellenmaschinenmodul an das Quellen-Kurznachrichtenzentrum zu übertragen, wenn die Statusberichtsnachricht darauf hinweist, dass die Transferdienst-Kurznachricht erfolgreich an die Transfernummer ausgeliefert wurde; oder
eine Nicht-erfolgreich-Statusberichtsnachricht zu erstellen und über das Schnittstellenmaschinenmodul (201, 601) an das Quellen-Kurznachrichtenzentrum (102) zu übertragen, wenn die Statusberichtsnachricht darauf hinweist, dass die Transferdienst-Kurznachricht nicht erfolgreich an die Transfernummer ausgeliefert wurde.

## Revendications

1. Procédé de transfert de messages courts comprenant :
recevoir (405, 505) un message de rapport d'état d'un message court de service de transfert transmis par un centre de messages courts de destination (103) ;
**caractérisé en ce que** le procédé de transfert de messages courts comprend également :
requérir (406, 506) un numéro de transfert correspondant à un numéro de destination du message court de service de transfert quand le message de rapport d'état indique que le message court de service de transfert n'est pas délivré avec succès ;
remplacer (407, 507) le numéro de destination du message court de service de transfert par le numéro de transfert et, transmettre (407, 507) le message court de service de transfert à un centre de transfert de messages courts (104).

2. Procédé de transfert de messages courts selon la revendication 1, dans lequel, avant de recevoir le message de rapport d'état du message court de service de transfert transmis par le centre de messages courts de destination (103), le procédé comprend en outre :
recevoir (402) un message court transmis par un centre source de messages courts (102) ;
si le numéro de destination du message court ouvre un service de transfert, déterminer que le message court est un message court de service de transfert ;
déterminer si le numéro de destination du message court de service de transfert est actuellement dans un état de transfert absolu ou dans un état de transfert conditionnel (403, 503) dans lequel, dans l'état de transfert absolu, tous les messages courts transmis au numéro de destination sont transférés au numéro de transfert ; et, dans l'état de transfert conditionnel, le message court est transmis au numéro de transfert seulement quand le numéro de destination est inaccessible ;
si le numéro de destination du message court de service de transfert est actuellement dans un état de transfert conditionnel, délivrer le message court de service de transfert au centre de messages courts de destination (404, 504) ; ou
si le numéro de destination du message court de service de transfert est actuellement dans un état de transfert absolu, transmettre le message court de service de transfert au centre de transfert de messages courts.

3. Procédé de transfert de messages courts selon la revendication 1 ou 2, dans lequel délivrer le message court de service de transfert au centre de messages courts de destination (404, 504) comprend spécifiquement :
délivrer le message court de service de transfert au centre de messages courts de destination et indiquer au centre de messages courts de destination de délivrer le message court de service de transfert une seule fois et renvoyer un message de rapport d'état ; ou
délivrer le message court de service de transfert au centre de messages courts de destination et indiquer au centre de messages courts de destination de délivrer le message court de service de transfert au moyen d'une délivrance répétitive et d'un renvoi d'un message de rapport d'état.

4. Procédé de transfert de messages courts selon la revendication 1, comprenant en outre :
si le message de rapport d'état indique que le message court de service de transfert est délivré avec succès, transmettre un message de rapport d'état au centre source de messages courts du message court de service de transfert pour indiquer que le message court de service de transfert est délivré avec succès.

5. Procédé de transfert de messages courts selon la revendication 1, dans lequel, après avoir remplacé le numéro de destination du message court de service de transfert par le numéro de transfert et transmis le message court de service de transfert au centre de transfert de messages courts, le procédé comprend en outre :
recevoir le message de rapport d'état transmis par le centre de transfert de messages courts ;
si le message de rapport d'état indique que le message court de service de transfert est délivré avec succès au numéro de transfert, construire et transmettre un message de rapport d'état réussi au centre de messages courts source ; ou
si le message de rapport d'état indique que le message court de service de transfert n'est pas délivré avec succès au numéro de transfert, construire et transmettre un message de rapport d'état échoué au centre source de messages courts.

6. Sous-système de transfert de messages courts (101, 701) comprenant :
un module de machine interface (201, 601) configuré pour recevoir (405, 505) un message de rapport d'état d'un message court de service de transfert transmis par un centre de messages courts de destination (103) ;
**caractérisé en ce que** le sous-système de transfert de messages courts (101, 701) comprend également :
un module de traitement de service (203, 602) configuré pour rechercher (406, 506) un numéro de transfert correspondant à un numéro de destination du message court de service de transfert (104) quand le message de rapport d'état indique que le message court de service de transfert n'est pas délivré avec succès, pour remplacer (407, 507) le numéro de destination du message court de service de transfert par le numéro de transfert et pour transmettre (407, 507) du message court de service de transfert au centre de transfert de messages courts (104) par le biais du module de machine interface (201, 601).

7. Sous-système de transfert de messages courts (101, 701) selon la revendication 6, dans lequel
le module de machine interface (201, 601) est configuré en outre pour recevoir un message court transmis par un centre source de messages courts (102), déterminer si le message court est ou non un message court de service de transfert et transmettre le message court de service de transfert au module de traitement de service (203, 602) ;
le module de traitement de service (203, 602) est configuré en outre pour déterminer si le numéro de destination du message court de service de transfert est actuellement dans un état de transfert absolu ou dans un état de transfert conditionnel (403, 503) dans lequel, dans l'état de transfert absolu, tous les messages courts transmis au numéro de destination sont transférés au numéro de transfert ; et, dans l'état de transfert conditionnel, le message court est transmis au numéro de transfert seulement quand le numéro de destination est inaccessible, et pour délivrer le message court de service de transfert au centre de messages courts de destination (404, 504) quand le numéro de destination du message court de service de transfert est actuellement dans un état de transfert conditionnel ; ou transmettre le message court de service de transfert au centre de transfert de messages courts quand le numéro de destination du message court de service de transfert est actuellement dans un état de transfert absolu.

8. Sous-système de transfert de messages courts (101, 701) selon la revendication 6, dans lequel
le module de machine interface (201, 601) est configuré en outre pour recevoir le message de rapport d'état transmis par le centre de transfert de messages courts ;
le module de traitement de service (203, 603) est configuré en outre pour :
construire et transmettre un message de rapport d'état réussi au centre source de messages courts par le biais du module de machine interface quand le message de rapport d'état indique que le message court de service de transfert est délivré avec succès au numéro de transfert ; ou
construire et transmettre un message de rapport d'état échoué au centre source de messages courts (102) par le biais du module de machine interface (201, 601) quand le message de rapport d'état indique que le message court de service de transfert n'est pas délivré avec succès au numéro de transfert.
